# EUROPÄISCHE PATENTSCHRIFT

(11) **EP 2 628 569 B1**
(45) Veröffentlichungstag und Bekanntmachung des Hinweises auf die Patenterteilung: **12.02.2020**
(21) Anmeldenummer: 13167489.7
(22) Anmeldetag: 17.12.2009
(51) Int. Cl.: B25B 21/00, B25B 23/14, B25F 5/00, F16D 7/08, B23B 45/00, F16D 7/04, F16H 35/10

(54) **Werkzeugmaschine, insbesondere handgehaltene Werkzeugmaschine**
Machine tool, particularly hand-held machine tool
Machine-outil, notamment machine-outil manuelle

(30) Priorität: 16.01.2009 DE 102009000267; 12.11.2009 DE 102009046663
(43) Veröffentlichungstag der Anmeldung: 21.08.2013
(62) Teilanmeldung aus: 09796706.1
(73) Patentinhaber: ROBERT BOSCH GMBH, 70442 Stuttgart (DE)
(72) Erfinder: Hecht, Joachim, 71106 Magstadt (DE); Roehm, Heiko, 70176 Stuttgart (DE); Kraus, Martin, 70794 Filderstadt (DE)

(56) Entgegenhaltungen:
- EP-A1- 0 787 931
- DE-A1- 2 829 291
- DE-A1- 3 720 633
- DE-A1-102004 058 809
- GB-A- 2 124 112

## Beschreibung

Die Erfindung bezieht sich auf eine Werkzeugmaschine, insbesondere eine handgehaltene Werkzeugmaschine, nach dem Oberbegriff des Anspruches 1. Eine derartige Handwerkzeugmaschine ist beispielsweise aus EP 0 787 931 A1, GB 2 124 112 A, DE 37 20 633 A1 und DE 28 29 291 A bekannt.

### Stand der Technik

Bekannt sind solche Werkzeugmaschinen als handgehaltene Maschinen in Form von Akku-Schraubern aus der DE 10 2004 058 809 A1. Bei diesen wird über einen mehrstufigen Planetentrieb eine Werkzeugaufnahme angetrieben. Im Übergang auf die Werkzeugaufnahme ist eine Drehmomentenbegrenzungseinheit vorgesehen, über die der Kraftfluss zwischen Motor und Werkzeugaufnahme unterbrochen wird, wenn das übertragene Drehmoment einen vorgegebenen, eingestellten Wert übersteigt. Die Drehmomentenbegrenzungseinheit arbeitet verrastend mithilfe einer Federabstützung, die den Planetenträger des Planetentriebes in einer Drehlage zum Gehäuse im normalen Betrieb fixiert. Erst wenn das auf die Werkzeugaufnahme zu übertragende Drehmoment einen eingestellten Grenzwert überschreitet, wird der Planetenträger freigegeben und damit der Kraftfluss auf die Werkzeugaufnahme unterbrochen.

Bei dieser bekannten Lösung erstreckt sich die Rastabstützung umschließend zum Planetentrieb und die Federabstützung erfolgt mithilfe von Schraubenfedern, die ihrerseits lagefest zum Gehäuse abgestützt sind und axial im Übergang auf einen radial auskragenden Rand des Planetenträgers aneinander anschließende Rastscheiben beaufschlagen, die gegeneinander verrastend drehfest festgelegt sind, solange der für das Drehmoment als Maximalwert vorgegebene Grenzwert nicht überschritten wird. Wird der Grenzwert überschritten, so wird die verrastende Verbindung zwischen den Rastscheiben durch axialen Versatz derselben aufgehoben und die Drehmomentenübertragung auf die Werkzeugaufnahme unterbrochen. Insgesamt führt eine derartige Ausgestaltung der Rastaufnahme mit umschließender Anordnung zum Planetentrieb bei axialer Überdeckung desselben zu einer zwar geschlossenen Bauform für die Drehmomentenbegrenzungseinheit, aber auch zu einer Bauform der Werkzeugmaschine, die deren Einsatzspektrum einschränkt.

Bei einer weiteren bekannten Lösung arbeitet die Drehmomentenbegrenzungseinheit mit einer zum Hohlrad des Planetentriebes axial liegenden Federabstützung, über die Rastkörper gegen eine Stirnseite des Hohlrades verrastend angedrückt werden.

### Offenbarung der Erfindung

Hiervon ausgehend liegt der Erfindung die Aufgabe zugrunde, insbesondere durch Verkürzung der Drehmomentenbegrenzungseinheit eine geringere Baulänge der Werkzeugmaschine zu ermöglichen.

Diese Aufgabe wird erfindungsgemäß mit den Merkmalen des Anspruches 1 gelöst. Die Unteransprüche geben zweckmäßige Weiterbildungen an.

Bei der erfindungsgemäßen Lösung werden die Rastkörper und die Federabstützung radial versetzt zueinander angeordnet, liegen also in radialer Richtung nebeneinander, wobei bevorzugt die Rastkörper an Teilen des Planetentriebes, insbesondere am Hohlrad oder Planetenträger, abgestützt sind. Dies macht es möglich, eine Federabstützung mit zumindest einem Federelement zu verwenden, das über ein Überbrückungsglied in Richtung auf die Rastkörper radial versetzt zu diesen abgestützt ist, bei bevorzugter stirnseitiger Abstützung gegen die Ringwand des Hohlrades oder den Planetenträger. Ein im Aufbau axial kurzer Planetentrieb wird so mit einer axial kurz bauenden Rastabstützung kombiniert, die je nach radialer Lage der Rastkörper zur Federabstützung die Verwendung verhältnismäßig langer Federelemente ermöglicht, wie auch eine Anordnung der Federelemente, die zu einem schlanken Aufbau der Drehmomentenbegrenzungseinheit führt. Insbesondere ist es so auch möglich, Federelemente, sei es in Form von Ringfedern, Ringfederpaketen, vor allem aber auch Schraubenfedern zu verwenden, deren Länge größer ist als der Abstand zwischen der Druckfläche des Stützgliedes, das bevorzugt längs eines gehäuseseitigen Gewindes verstellbar ist, und der seitens der Rastkörper vorgesehenen Druckfläche. Ferner ist es auch möglich, das gehäuseseitige Gewinde für das insbesondere als Druckmutter ausgebildete Stützglied axial in Flucht zu den Rastkörpern, insbesondere etwa deren Mittenkreis vorzusehen. Erreicht wird dadurch insgesamt eine kurze Baulänge der Drehmomentenbegrenzungseinheit, insbesondere deren Kupplungsteiles einschließlich Verrastung und Stützglied. Ferner lassen sich so kurze Toleranzketten und steife Geometrien bei einer prozesssicheren Verriegelungsfunktion erreichen und dies bei reduziertem Teileumfang, wenn zur Führung der Federelemente, insbesondere der Schraubenfedern, das Getriebegehäuse mit herangezogen wird, so dass auch bei langen Schraubenfedern ohne großen Führungsaufwand eine Federausknickung verhindert wird.

Bei radial nach innen versetzt angeordneten Federabstützungen sind diese bevorzugt konzentrisch zu den Rastkörpern angeordnet, wobei der Radialversatz über ein Überbrückungsglied überbrückt wird, das als Ring mit zwischen Federelementen und Rastkörpern radial verlaufenden Schenkeln versehen ist, so dass eine radiale Überbrückung ungeachtet dazwischenliegender Gehäuseteile möglich ist, und damit auch die axiale Abstützung der Rastkörper in Form von Rastkugeln oder Rastbolzen gegen die Stirnseite der Ringwand des Hohlrades oder den Planetenträger, selbst wenn die Federabstützung teilweise in radialer Überlappung zum Hohlrad verläuft.

Insbesondere im Hinblick auf eine schlanke Gestaltung des auf die Werkzeugaufnahme auslaufenden Endes der Werkzeugmaschine erweist es sich als zweckmäßig, dass die Federabstützung zu den Rastkörpern radial nach innen versetzt angeordnet ist, wobei für eine solche Lösung insbesondere von Vorteil ist, wenn mit axial kurzen Federelementen, insbesondere auch Ringfedern oder Ringfederpaketen gearbeitet wird. Zudem ermöglicht eine solche sehr kurz bauende Lösung auch eine besonders einfache Gestaltung der Führung der Feder und des Überbrückungsgliedes.

Die Erfindung betrifft des Weiteren eine Drehmomentenbegrenzungseinheit für Werkzeugmaschinen als solche und ermöglicht einen sehr kompakten und auch konstruktiv sowie fertigungstechnisch gut zu beherrschenden Aufbau derselben.

Weitere Vorteile und zweckmäßige Ausführungen sind den Ansprüchen, der Figurenbeschreibung und den Zeichnungen zu entnehmen. Es zeigen:
- Fig. 1: eine stark schematisierte Darstellung einer Handwerkzeugmaschine mit aus einem Antriebsmotor, Getriebe und Spindel zur Werkzeugaufnahme bestehendem Antriebsstrang,
- Fig. 2: (nicht erfindungsgemäßes Ausführungsbeispiel) und 3 stark vereinfachte, schematisierte Teildarstellungen des auf die Spindel zur Werkzeugaufnahme auslaufenden Getriebebereiches mit in diesem Getriebebereich angeordneter Drehmomentenbegrenzungseinheit,
- Fig. 4: einen vereinfachten Längsschnitt des auf die Werkzeugaufnahme auslaufenden vorderen Getriebebereiches,
- Fig. 5: eine Ansicht des Getriebebereiches gemäß Fig. 4 in Perspektive, wobei wie in Fig. 4 das umschließende Maschinengehäuse nicht gezeigt ist,
- Fig. 6: eine der Fig. 4 entsprechende Darstellung einer weiteren Ausführungsform,
- Fig. 7: eine Teilansicht zur Darstellung gemäß Fig. 6, und
- Fig. 8: eine den Darstellungen gemäß Fig. 2 und 3 entsprechende Schemadarstellung, in der als von den Rastkörpern beaufschlagtes Teil des Planetentriebes der Planetenträger vorgesehen ist, wobei in der linken Hälfte der Darstellung (nicht erfindungsgemäßes Ausführungsbeispiel), analog zu Fig. 2, die Federabstützung in radial nach außen versetzter Lage zu den Rastkörpern veranschaulicht ist, und in der rechten Hälfte der Darstellung, analog zu Fig. 3, in radial nach innen versetzter Lage.

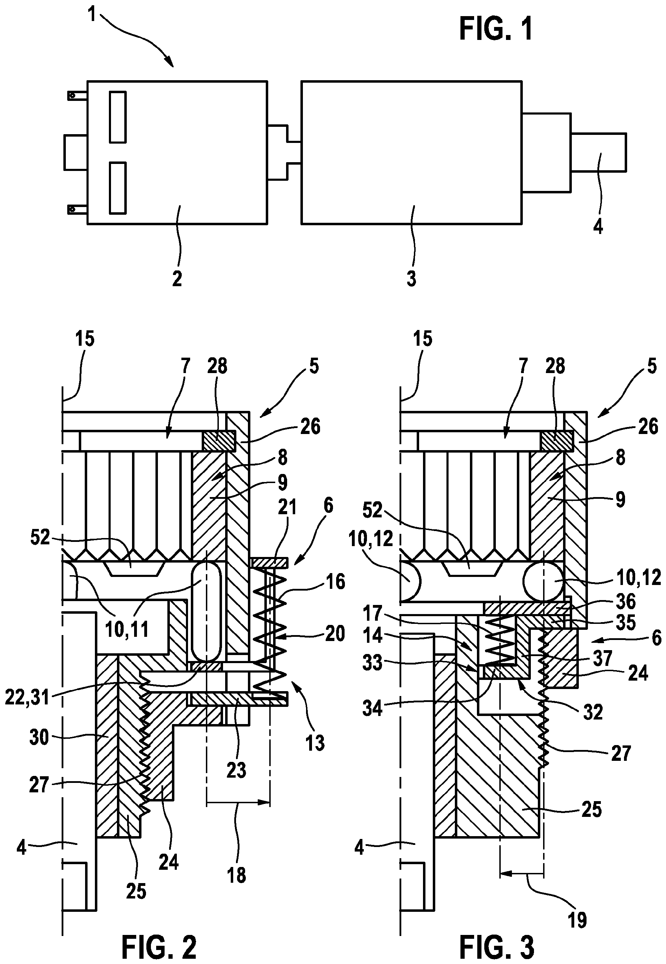

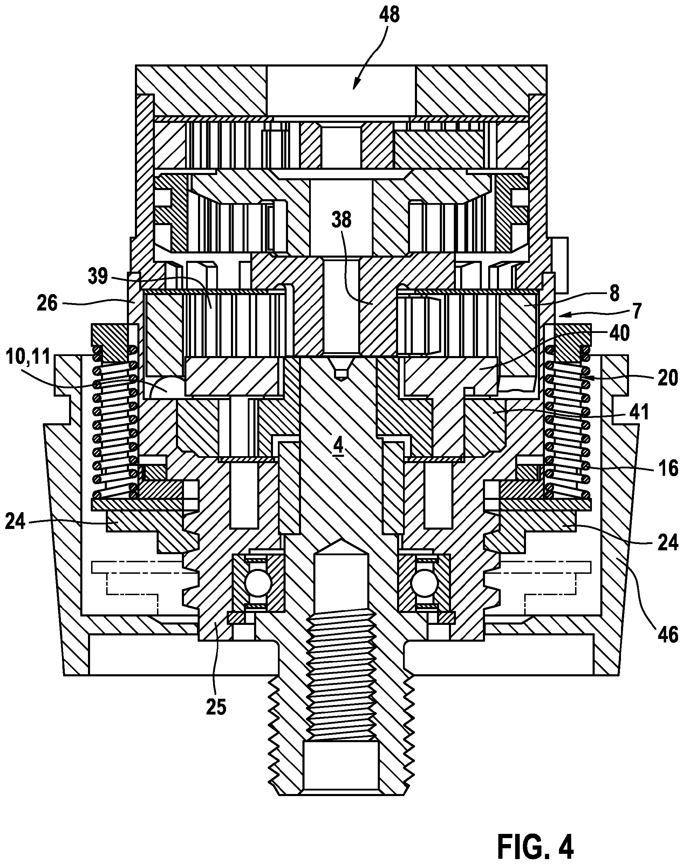

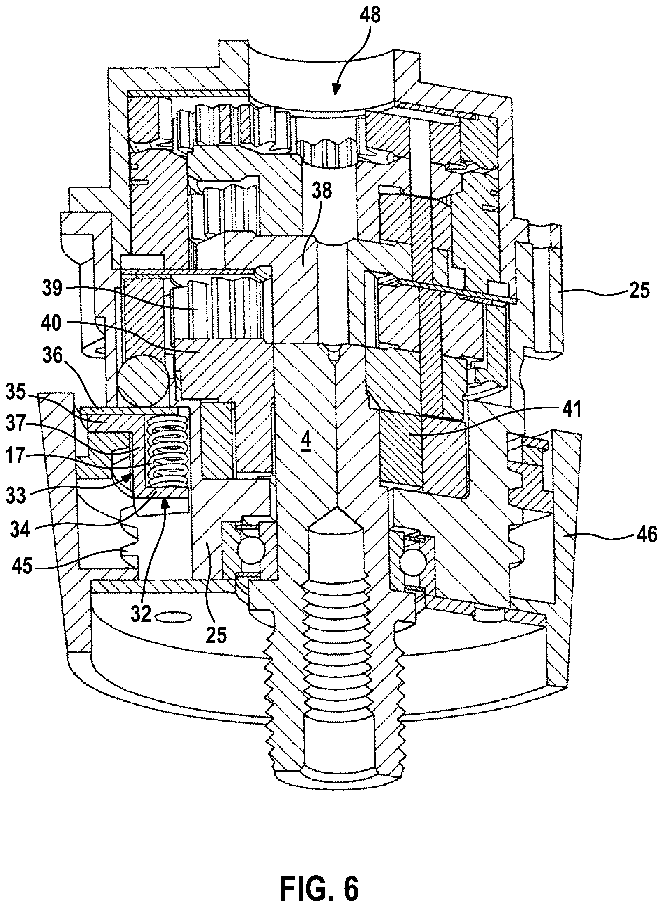

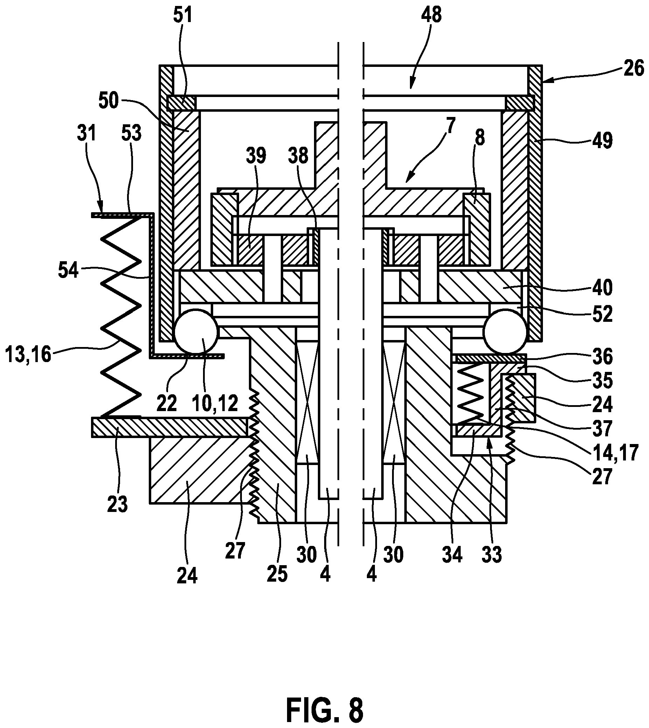

In Fig. 1 ist stark schematisiert eine Werkzeugmaschine 1 in ihrem Grundaufbau als elektrisch angetriebene, handgehaltene Werkzeugmaschine dargestellt, wie sie beispielsweise als Akku-Bohrer oder Akku-Schrauber benutzt wird. Die wesentlichen Bauelemente dieser Werkzeugmaschine 1 sind der Antriebsmotor 2, eine Getriebe 3 sowie eine über das Getriebe 3 angetriebene Spindel 4, über die der Antrieb des nicht dargestellten Werkzeuges erfolgt, das in üblicher Weise in einem spindelseitigen Futter aufgenommen ist. Über das Getriebe 3 wird die Drehzahl des Antriebsmotors 2 in die für den praktischen Betrieb meist geforderte, niedrigere Antriebsdrehzahl für das Werkzeug übersetzt. Das Getriebe 2 ist - siehe Fig. 4 und 6 - insbesondere als Planetentrieb 48 ausgebildet, bevorzugt mehrstufig und umschaltbar gestaltet und läuft im Übergang zur Spindel 4 auf eine Drehmomentenbegrenzungseinheit 5 aus, die insbesondere bezüglich ihrer Rastabstützung 6 in vereinfachten Teildarstellungen aus den Fig. 2 und 3 sowie, korrespondierend hierzu, aus Fig. 8 ersichtlich ist.

Die Fig. 4 und 6 lassen den mehrstufigen Aufbau des als Planetentrieb 48 gestalteten Getriebes 3 erkennen, der nachfolgend nur bezüglich seiner letzten, eingangsseitig zur Drehmomentenbegrenzungseinheit 5 liegenden Getriebestufe 7 näher erläutert wird, die in diesen Darstellungen bezüglich ihres Hohlrades 8 Teil der Rastabstützung 6 ist.

In den Fig. 2 und 3 ist von dieser letzten Getriebestufe 7 als Teil der Rastabstützung 6 jeweils nur das Hohlrad 8 gezeigt, dessen Ringwand 9 stirnseitig mit Rastnocken 52 versehen ist, die mit Rastkörpern 10 zusammenwirken. Als Rastkörper 10 sind in Fig. 2 Rastbolzen 11 und in Fig. 3 Rastkugeln 12 vorgesehen, die jeweils über eine Federabstützung 13 gemäß Fig. 2 und 14 gemäß Fig. 3 axial, vorliegend parallel zur Getriebeachse 15 gegen die Stirnseite der Ringwand 9 des Hohlrades 8 angedrückt sind.

Die Federabstützungen 13 und 14 weisen jeweils Federelemente 16, 17 auf, die im Ausführungsbeispiel als Schraubenfedern über den Umfang des Hohlrades 8 mit Abstand zueinander liegend verteilt angeordnet sind. Die Federelemente 16, 17 können jeweils auch durch Einzelfedern oder Federpaare anderen Aufbaus gebildet sein, und es können anstelle einer Mehrzahl von über den Umfang verteilt angeordneten Federelementen 16, 17 auch Ringfedern, gegebenenfalls auch Ringfederpakete Verwendung finden.

Gemeinsam ist in der erfindungsgemäßen Ausgestaltung der Drehmomentenbegrenzungseinheit 5 gemäß Fig. 2 und 3 die radial versetzte Anordnung der Federabstützungen 13, 14 mit ihren Federelementen 16, 17 zu den Rastkörpern 10 in ihrer Ausbildung als Rastbolzen 11 oder Rastkugeln 12. In Fig. 2 sind die jeweiligen Federelemente 16 der Federabstützung 13 radial nach außen gegenüber den durch die Rastbolzen 11 gebildeten Rastkörpern 10 versetzt angeordnet und dieser Versatz ist in Fig. 2 durch den Pfeil 18 veranschaulicht. Fig. 3 zeigt einen prinzipiell entsprechenden Aufbau, aber mit einem Versatz der Federabstützung 14 mit dem Federelement 17 gegenüber den durch die Rastkugeln 12 gebildeten Rastkörpern 10 nach radial innen, veranschaulicht durch den Pfeil 19.

Aus Fig. 2 ist für die dort gezeigte Konstruktion mit zum Rastkörper 10 radial nach außen versetzter Federabstützung 13 ersichtlich, dass die Federelemente 16 jeweils auf einem Federträger 20 angeordnet sind, der ringförmig umschließend zu den Rastkörpern 10 verläuft und im radialen Überdeckungsbereich zu den Rastkörpern 10 in Achsrichtung 15 verlaufende Federstützen 21 aufweist, zu denen fußseitig radial nach innen ragende Stützschenkel 22 vorgesehen sind, auf denen die Rastkörper 10 gegenüberliegend zur Stirnseite der Ringwand 9 des Hohlrades 8 anliegen. Die Federstützen 21 und die Stützschenkel 22 bilden somit im Wesentlichen winkelförmige Überbrückungsglieder 31, die in Umfangsrichtung ringförmig verbunden sind.

Fußseitig ist das jeweilige auf einer Federstütze 21 gehaltene und kopfseitig abgestützte Federelement 16 in seinem über den Federträger 20 in der Zeichnung nach unten, das heißt in Gegenrichtung zum Hohlrad 8 hinausragenden Bereich auf einer ringförmigen Federführung 23 abgestützt, die ihrerseits von einem in Achsrichtung verstellbaren und die Funktion einer Druckmutter übernehmenden Stützglied 24 getragen ist. Das Stützglied 24 ist an einem Gehäuseteil 25 des umschließend zum Hohlrad 8 vorgesehenen Getriebegehäuses 26 angeordnet und über eine Gewindeverbindung 27 in Richtung der Achse 15 zum Gehäuse 26 axial verstellbar. Hierdurch wird der axiale Abstand zwischen der ringförmigen Federführung 23 und dem Federträger 20 verändert, auf dessen Federstützen 21 die Federelemente 16 gegenüberliegend abgestützt sind. Damit ist durch axiale Verstellung des Stützgliedes 24 mit der Federführung 23 zur Federabstützung 13 die axiale Vorspannung zu bestimmen, mit der die Rastkörper 10 gegen die Stirnseite des Hohlrades 8 anliegen, das axial gegenüberliegend zu den Rastkörpern 10 gegen das Getriebegehäuse 26 abgestützt ist, was im Ausführungsbeispiel über einen in eine Ringnut des Gehäuses 26 eingreifenden Spannring 28 veranschaulicht ist. Im Getriebegehäuse 26, in der zeichnerischen Darstellung gemäß Fig. 2 gegenüber dessen Gehäuseteil 25, ist auch die Spindel 4 gelagert, die mit einer Werkzeugaufnahme versehen oder mit einer Werkzeugaufnahme verbunden ist und die gegenüber dem Gehäuseteil 25 über ein Lager 30, insbesondere ein Gleitlager abgestützt ist.

Fig. 2 veranschaulicht, dass durch die Axialverstellung des Stützgliedes 24 nicht nur die Vorspannkraft der Rastabstützung 6 einstellbar ist, sondern die Rastabstützung 6 letztlich auch blockiert werden kann, wenn das Stützglied 24 gegen den Stützschenkel 22 anliegt und somit eine direkte Abstützung vom Stützglied 24 über die Rastkörper 10 zum Hohlrad 8 gegeben ist, über die das Hohlrad 8 blockiert ist.

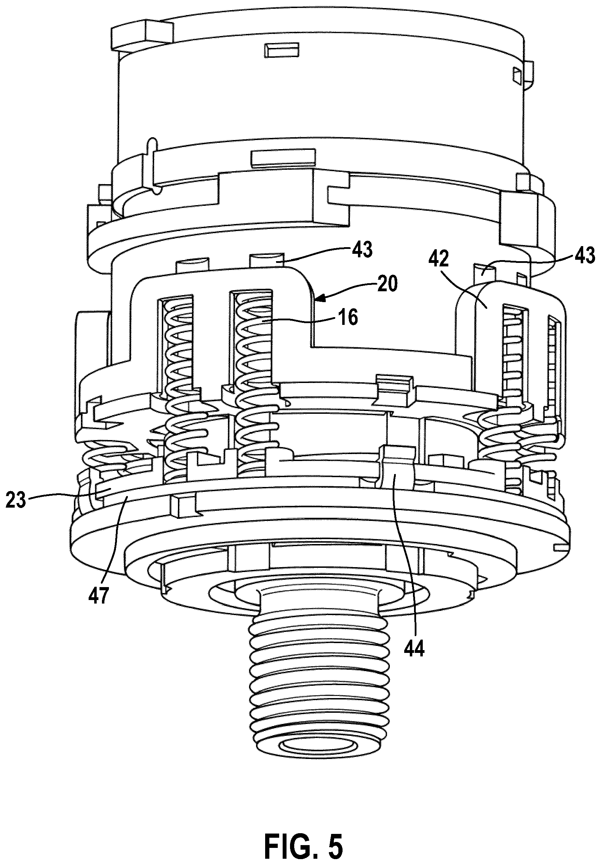

Erkennbar ist aus Fig. 2 auch, dass die Federführung 23 axial verschieblich, aber drehfest zum Getriebegehäuse 26 festgelegt ist, was bezüglich des Federträgers 20, wie in Fig. 5 angedeutet, unter anderem dadurch zu erreichen ist, dass dieser mit seinen über die Federstützen 21 getragenen Federn 16 in Führungsvertiefungen 43 des Getriebegehäuses 26 liegt und/oder dass für die Rastkörper 10 seitens des Gehäuses 26 entsprechende Axialführungen vorgesehen sind, was nicht gezeigt ist.

Eine der Fig. 2 in der Funktion weitgehend entsprechende Lösung zeigt Fig. 3, die sich prinzipiell allerdings durch den radialen Versatz der Federabstützungen 14 mit den Federelementen 17 gegenüber den Rastkörpern 10 nach radial innen, im Gegensatz zu Fig. 2 nach radial außen, unterscheidet.

Ist bei der Ausgestaltung gemäß Fig. 2 die Federabstützung 13 durch einen Federträger 20 mit axial verlaufenden Federstützen 21 und radial verlaufenden Stützschenkeln 22 als Überbrückungsgliedern 31 ausgebildet, so ist bei der Ausgestaltung gemäß Fig. 3 die Federabstützung 14 durch einen ringförmigen Federträger 32 als Überbrückungsglied 33 gestaltet, das, nach radial innen ragend, das Federelement 17 untergreifende Stützschenkel 34 und einen nach radial außen ragenden Kragschenkel 35 aufweist, wobei die Stützschenkel 34 und der Kragschenkel 35 axial gegeneinander versetzt sind und der ringförmige Kragschenkel 35 gegen einen Tragring 36 abgestützt ist, der zum Gehäuse 26 drehfest festgelegt ist und auf dem gegenüberliegend zum Kragschenkel 35 die Rastkörper 10 abgestützt sind. Auf den Tragring 36 ist radial nach innen gegenüber dem Kragschenkel 35 versetzt das jeweilige Federelement 17 abgestützt, das so zwischen dem Tragring 36 und dem Stützschenkel 34 axial eingespannt ist. Gegen den Kragschenkel 35 stützt sich axial das Stützglied 24 ab, analog zu Fig. 2, das auf dem Gehäuseteil 25 axial über eine Gewindeverbindung 27 verstellbar angeordnet ist und das bevorzugt wiederum durch eine Druckmutter gebildet ist.

Dargestellt ist in Fig. 3 eine Situation, in der die Drehmomentenbegrenzungseinheit 5 auf Block gefahren und somit außer Funktion gesetzt ist, indem über das Stützglied 24, über den dazwischen liegenden Kragschenkel 35 und den Tragring 36 der Rastkörper 10 derart gegen die Stirnwand des Hohlrades 8 verrastend angedrückt ist, dass eine drehfeste Verbindung gegeben ist. Wird das Stützglied 24 aus dieser Position in Fig. 3 nach unten verfahren, - hierfür dient der Stellring 46, siehe Fig. 4 und 6 - so wird der Rastkörper 10 mit einer lediglich durch die Kraft des Federelementes 17 bestimmten Spannkraft beaufschlagt, so dass über die axiale Lage des Stützgliedes 24 ein jeweiliger Grenzwert für die Drehmomentenbegrenzungseinheit 5 eingestellt werden kann. Dies veranschaulicht Fig. 2.

Bei der Ausgestaltung gemäß Fig. 3 weist das Überbrückungsglied 33 jeweils im Querschnitt Z-förmige Grundform auf, bei radial nach innen ragenden Stützschenkeln 34 und jeweils über axial verlaufende Stege 37 mit den Stützschenkeln 34 verbundenem Kragschenkel 35, wobei die Stützschenkel 34 jeweils in Überdeckung zu Federelementen 17 liegen.

Einen den Schemadarstellungen gemäß Fig. 2 und 3 entsprechenden Aufbau des auf die Werkzeugaufnahme auslaufenden, vorderen Teil des Getriebes 3 mit zugeordneter Drehmomentenbegrenzungseinheit 5 zeigen die Fig. 4 und 5 in Entsprechung zu Fig. 2, sowie 6 und 7 in Entsprechung zu Fig. 3. Es finden insoweit die jeweils gleichen Bezugszeichen Verwendung, so dass sich anhand dieser Bezugszeichen und der Funktionsbeschreibung zu den Fig. 2 und 3 der entsprechende Aufbau erkennen lässt.

Ergänzend ergibt sich aus den Fig. 4 bis 7 der Aufbau der mit seinem Hohlrad 8 der Drehmomentenbegrenzungseinheit 5 zugehörigen Getriebestufe, deren zentrales Sonnenrad 38 mit Planetenrädern 39 eines Planetenträgers 40 kämmt, der mit einem Abtriebsstern 41 und über diesen mit der Spindel 4 drehfest verbunden ist.

Weiter veranschaulicht Fig. 5 eine praktisch zweckmäßige Ausgestaltung der Federabstützung 13 mit paarweiser Anordnung von Federelementen 16 in gehäuseartigen Aufnahmen 42, die zumindest weitgehend die seitliche Führung der Federelemente 16 übernehmen und somit ein Ausknicken derselben verhindern. Zumindest gegen das Getriebegehäuse 26 kann diese Führung auch durch das Getriebegehäuse 26 selbst gebildet sein, das hierfür zweckmäßigerweise mit entsprechenden Führungsvertiefungen 43, insbesondere rinnenförmigen Führungsvertiefungen 43 versehen ist, wodurch sich auch in Umfangsrichtung eine Abstützung zwischen der Federabstützung 13 und dem Getriebegehäuse 26 ergibt. Ferner veranschaulicht Fig. 5, dass die ringförmige Federführung 23 axial angelegt an den Federträger 20 gegen diesen über Rasthaken 44 verhakbar und damit zu einer die Federelemente 16 gespannt einschließenden Einheit zu verbinden ist. Die Rasthaken 44 sind an einer untergreifend zur Federführung 23 liegenden Scheibe 47 angeordnet.

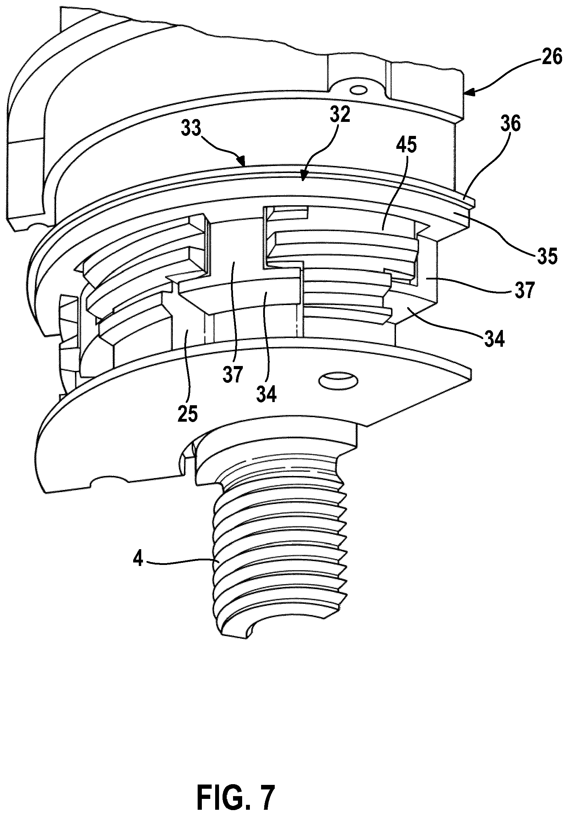

Aus Fig. 6 und 7 ist ergänzend zu Fig. 3 insbesondere der Aufbau des Überbrückungsgliedes 33 in Z-Form ersichtlich, und zwar mit seinem ringförmigen Kragschenkel 35, der auf dem Tragring 36 aufsitzt, ferner mit seinem vom ringförmigen Kragschenkel 35 ausgehenden, axial verlaufenden Steg 37 und seinen radial nach innen einspringenden Stützschenkeln 34, auf denen jeweils die Feder 17 - in Fig. 7 nicht ersichtlich - abgestützt ist. Für das Stützglied 24 ist das untere Gehäuseteil 25 im Überdeckungsbereich zu den Stegen 37 mit einem Gewinde 45 versehen.

Bei den in Fig. 8 in weiterer Vereinfachung dargestellten Ausführungsbeispielen, zu deren Erläuterung weitgehend auf die bisher schon verwendeten Bezugszeichen zurückgegriffen wird, sind in die als Rastkugeln 12 dargestellten Rastkörper 10 seitens des mit seiner letzten Getriebestufe 7 veranschaulichten Planetentriebes 48 nicht, wie anhand der Fig. 2 bis 7 gezeigt, gegen das Hohlrad 8, sondern gegen den Planetenträger 40 des Planetentriebes 48 abgestützt. Der Planetenträger 40 ragt in dieser Darstellung radial über das Hohlrad 8 hinaus und erstreckt sich bis nahe an eine Umfangswand 49 des Getriebegehäuses 26, gegen die er axial gegenüberliegend zu den Rastkörpern 10 abgestützt ist. Die Abstützung ist über eine Abstützhülse 50 veranschaulicht, die axial über einen Sicherungsring 51 zur Umfangwand 49 festgelegt ist.

Der Planetenträger 40 treibt über das Sonnenrad 38 die Spindel 4 an, die über das Lager 30 im auf die nicht dargestellte Werkzeugaufnahme auslaufenden Gehäuseteil 25 gelagert ist. Längs dieses Gehäuseteils 25 ist das Stützglied 24 verstellbar, über das das Federelement 16 bzw. 17 der jeweiligen Federabstützung 13 bzw. 14 hinsichtlich der Stützkraft einstellbar ist, mit der der jeweilige Rastkörper 10 gegen den mit Rastnocken 52 versehenen Planetenträger 40 abgestützt ist.

In Fig. 8 linksseitig liegt die Federabstützung 13 radial nach außen gegen die Rastkörper 10 versetzt, während rechtsseitig die radial nach innen versetzte Lage der Federabstützung 14 zu dem Rastkörper 10 veranschaulicht ist, analog zu den Darstellungen in Fig. 2 und 3.

Bezogen auf die linksseitig gezeigte, nach radial außen versetzte Federabstützung 13 ist deren Federelement 16 zwischen einer ringförmigen, auf dem Stützglied 24 aufliegenden Federführung 23 und einem nur schematisch dargestellten Überbrückungsglied 31 eingespannt, das einen radial, die Rastkörper 10 untergreifenden Stützschenkel 22 und einen axial hierzu versetzt im Übergriffsbereich zur Umfangswand 49 des Gehäuses 26 liegenden, radial nach außen auskragenden Tragschenkel 53 aufweist, so dass sich in Verbindung mit einem zwischen dem Stützglied 24 und dem Tragschenkel 53 verlaufenden, sich axial erstreckenden Stegteil 54 eine im Querschnitt Z-förmige Kontur des ringförmigen Überbrückungsgliedes 31 ergibt. Eine solche Ausgestaltung ermöglicht, wie auch schon anhand der Fig. 2 erläutert, lange Federwege, wobei eine etwa notwendige Führung des Federelementes in nicht dargestellter Weise dem Überbrückungsglied 31 zugeordnet sein kann, das sich mit seinem Stegteil 54 axial in Überdeckung zur dargestellten Getriebestufe erstrecken kann.

Fig. 8 rechtsseitig zeigt bei gleichem Grundaufbau, analog zu Fig. 3, die radial nach innen versetzte Lage der Federabstützung 14 zu den Rastkörpern 10, wobei auch hier das Überbrückungsglied 33 als Ringkörper mit Z-förmigem Querschnitt gestaltet ist. Dieser weist im Übergang auf die Rastkörper 10 einen radial nach außen ragenden Kragschenkel 35 und einen radial nach innen ragenden Stützschenkel 34 auf, von denen der Stützschenkel 34 gegenüber dem Kragschenkel 35 nach der von den Rastkörpern 10 abgewandten Seite axial abgesetzt ist, so dass sich, radial nach innen versetzt zu den Rastkörpern 10, längs des den Kragschenkel 35 mit dem Stützschenkel 34 verbindenden Steges 37 ein geschützter Aufnahmeraum für das in diesem angeordnete Federelement 17 oder die in diesem angeordneten Federelemente 17 ergibt. Zweckmäßigerweise ist zwischen den Rastkörpern 10 und dem Kragschenkel 35 ein Tragring 36 angeordnet, was es möglich macht, zumindest den Kragschenkel 35 des ringförmigen Überbrückungsgliedes 33 auch segmentiert auszubilden. Insgesamt ermöglicht eine derartige Lösung einen besonders gedrungenen Aufbau, der sich insbesondere auch für Federelemente 17 in Ringform eignet.

## Patentansprüche

1. Werkzeugmaschine, insbesondere handgehaltene Werkzeugmaschine, mit im Antrieb ihrer Werkzeugspindel (4) liegender, in einem Gehäuseteil (25) aufgenommener Drehmomentenbegrenzungseinheit (5), deren Auslösemoment über eine axiale Rastabstützung (6) einstellbar ist, welche zumindest eine Rastkörper (10) beaufschlagende Federabstützung (13, 14) mit zumindest einem Federelement (16, 17) aufweist und über ein in Achsrichtung der Werkzeugspindel (4) verstellbares Stützglied (24) gehäuseseitig abgestützt ist, wobei die Rastkörper (10) und das zumindest eine Federelement (16, 17) der Federabstützung (13, 14) radial versetzt zueinander liegen, wobei das zumindest eine Federelement (16, 17) der Federabstützung (13, 14) über ein Überbrückungsglied (31, 33) auf die radial versetzt liegenden Rastkörper (10) abgestützt ist, **dadurch gekennzeichnet, dass** die Federabstützung (14) radial nach innen versetzt zu den Rastkörpern (10) angeordnet ist, die insbesondere auf einem zur Federabstützung (14) achsgleichen Kreisring liegen und dass das Überbrückungsglied (33) einen ringförmigen Federträger (32) mit radial nach innen ragenden Stützschenkeln (34) aufweist, auf denen das gegen die Rastkörper (10) abstützende, zumindest eine Federelement (17) sitzt.

2. Werkzeugmaschine nach Anspruch 1, **dadurch gekennzeichnet, dass** die Drehmomentenbegrenzungseinheit (5) einen Planetentrieb (48) umfasst und dass die Rastkörper (10) gegen einen Teil des Planetentriebes (48), insbesondere dessen Hohlrad (8) oder dessen Planetenträger (40) abgestützt sind.

3. Werkzeugmaschine nach Anspruch 1 oder 2, **dadurch gekennzeichnet, dass** das Überbrückungsglied (33) bei im Querschnitt Z-förmiger Grundform gegenüberliegend zu den Stützschenkeln (34) für das Federelement (17) einen nach außen ragenden, zum Stützglied (24) abstützenden Kragschenkel (35) aufweist und dass die Federelemente (17) und der Kragschenkel (35) einerseits sowie die Rastkörper (10) andererseits gegen einen dazwischen liegenden Tragring (36) abgestützt sind.

4. Werkzeugmaschine nach einem der Ansprüche 1 bis 3, **dadurch gekennzeichnet, dass** als Federelemente (16, 17) zumindest eine Ringfeder oder Schraubenfeder vorgesehen sind, und dass die Federlänge der Federelemente (16, 17) in eingebautem Zustand größer ist als der Abstand der Druckfläche des Stützgliedes (24) zu einer am Planetentrieb vorgesehenen Druckfläche der Rastkörper (10).

5. Werkzeugmaschine nach einem der Ansprüche 1 bis 4, **dadurch gekennzeichnet, dass** das Stützglied (25) als Druckmutter ausgebildet ist, deren Gewindeverbindung (27) zum Gehäuse (25) axial in Flucht zu den Rastkörpern (10), insbesondere etwa deren Mittenkreis, liegt.

6. Werkzeugmaschine nach einem der Ansprüche 3 bis 5, **dadurch gekennzeichnet, dass** der ringförmige Kragschenkel (35) gegen einen Tragring (36) abgestützt ist, der zu dem Gehäuseteil (25) drehfest festgelegt ist und auf dem gegenüberliegend zu dem Kragschenkel (35) die Rastkörper (10) abgestützt sind.

7. Werkzeugmaschine nach einem der Ansprüche 1 bis 6, **dadurch gekennzeichnet, dass** sich das Stützglied (24) gegen den Kragschenkel (35) axial abstützt, wenn die Drehmomentenbegrenzungseinheit (5) außer Funktion gesetzt ist.

## Claims

1. Machine tool, in particular hand-held machine tool, with a torque-limiting unit (5) which is located in the drive of the tool spindle (4) of said machine tool, is accommodated in a housing part (25) and the triggering moment of which can be set via an axial latching support assembly (6), which has at least one spring support assembly (13, 14) acting upon latching bodies (10) and having at least one spring element (16, 17), and is supported on the housing side via a support member (24) which is adjustable in the axial direction of the tool spindle (4), wherein the latching bodies (10) and the at least one spring element (16, 17) of the spring support assembly (13, 14) lie radially offset with respect to each other, wherein the at least one spring element (16, 17) of the spring support assembly (13, 14) is supported on the latching bodies (10), which lie radially offset, via a bridging member (31, 33), **characterized in that** the spring support assembly (14) is arranged offset radially inwards with respect to the latching bodies (10) which lie in particular on a circular ring which is coaxial with the spring support assembly (14), and **in that** the bridging member (33) has an annular spring carrier (32) with supporting legs (34) which protrude radially inwards and on which the at least one spring element (17) which is supported against the latching bodies (10) sits.

2. Machine tool according to Claim 1, **characterized in that** the torque-limiting unit (5) comprises a planetary drive (48), and **in that** the latching bodies (10) are supported against a part of the planetary drive (48), in particular the ring gear (8) thereof or the planet carrier (40) thereof.

3. Machine tool according to Claim 1 or 2, **characterized in that** the bridging member (33), with a basic shape which is Z-shaped in cross section, has, opposite the supporting legs (34) for the spring element (17), an outwardly protruding cantilever leg (35) which is supported with respect to the support member (24), and **in that** the spring elements (17) and the cantilever leg (35), on the hand, and the latching bodies (10), on the other hand, are supported against a carrying ring (36) lying in-between.

4. Machine tool according to one of Claims 1 to 3, **characterized in that** at least one annular spring or helical spring is provided as spring elements (16, 17), and **in that** the spring length of the spring elements (16, 17) in the installed state is greater than the distance of the compression surface of the support member (24) from a compression surface of the latching bodies (10) that is provided on the planetary drive.

5. Machine tool according to one of Claims 1 to 4, **characterized in that** the support member (25) is designed as a pressure nut, the threaded connection (27) of which with respect to the housing (25) is axially aligned with the latching bodies (10), in particular approximately with the centre circle thereof.

6. Machine tool according to one of Claims 3 to 5, **characterized in that** the annular cantilever leg (35) is supported against a carrying ring (36) which is fixed non-rotatably with respect to the housing part (25) and on which the latching bodies (10) are supported opposite the cantilever leg (35).

7. Machine tool according to one of Claims 1 to 6, **characterized in that** the support member (24) is axially supported against the cantilever leg (35) when the torque-limiting unit (5) is not in operation.

## Revendications

1. Machine-outil, en particulier machine-outil portative, pourvue d'une unité (5) de limitation de couple située dans l'entraînement de sa broche d'outil (4) et reçue dans une partie de boîtier (25), le couple de déclenchement de l'unité de limitation de couple pouvant être réglé au moyen d'un appui d'encliquetage (6) axial qui comprend au moins un appui à ressorts (13, 14) sollicitant des corps d'encliquetage (10) et pourvu d'au moins un élément ressort (16, 17), et qui est supporté côté boîtier au moyen d'un organe d'appui (24) déplaçable dans la direction axiale de la broche d'outil (4), les corps d'encliquetage (10) et l'au moins un élément ressort (16, 17) de l'appui à ressorts (13, 14) étant situés de manière décalée radialement les uns par rapport aux autres, l'au moins un élément ressort (16, 17) de l'appui à ressorts (13, 14) étant supporté, au moyen d'un organe de pontage (31, 33), sur les corps d'encliquetage (10) situés de manière décalée radialement, **caractérisée en ce que** l'appui à ressorts (14) est disposé de manière décalée radialement vers l'intérieur par rapport aux corps d'encliquetage (10) qui se situent en particulier sur un anneau circulaire de même axe que l'appui à ressorts (14), et **en ce que** l'organe de pontage (33) comprend un support de ressorts (32) annulaire doté de branches de support (34) faisant saillie radialement vers l'intérieur, sur lesquelles repose l'au moins un élément ressort (17) s'appuyant contre les corps d'encliquetage (10).

2. Machine-outil selon la revendication 1, **caractérisée en ce que** l'unité (5) de limitation de couple comporte un engrenage planétaire (48) et **en ce que** les corps d'encliquetage (10) s'appuient contre une partie de l'engrenage planétaire (48), en particulier de sa couronne (8) ou de son porte-satellites (40).

3. Machine-outil selon la revendication 1 ou 2, **caractérisée en ce que** dans le cas d'une forme de base en forme de Z en section transversale, l'organe de pontage (33) comprend, de manière opposée aux branches de support (34) pour l'élément ressort (17), une branche en porte-à-faux (35) faisant saillie vers l'extérieur et supportée par rapport à l'organe d'appui (24), et **en ce que** les éléments ressorts (17) et la branche en porte-à-faux (35) d'une part ainsi que les corps d'encliquetage (10) d'autre part sont supportés contre un anneau de support (36) situé entre ceux-ci.

4. Machine-outil selon l'une des revendications 1 à 3, **caractérisée en ce qu'**au moins un anneau-ressort ou un ressort hélicoïdal est prévu en tant qu'élément ressort (16, 17), et **en ce que** la longueur des éléments ressorts (16, 17) est, à l'état monté, supérieure à la distance entre la surface de pression de l'organe d'appui (24) et une surface de pression des corps d'encliquetage (10) prévue sur l'engrenage planétaire.

5. Machine-outil selon l'une des revendications 1 à 4, **caractérisée en ce que** l'organe d'appui (25) est réalisé sous forme d'écrou de pression dont le raccord fileté (27) se situe, par rapport au boîtier (25), axialement en alignement par rapport aux corps d'encliquetage (10), en particulier approximativement par rapport à leur cercle médian.

6. Machine-outil selon l'une des revendications 3 à 5, **caractérisée en ce que** la branche en porte -à-faux (35) annulaire est supportée contre un anneau de support (36) qui est fixé de manière bloquée en rotation par rapport à la partie de boîtier (25) et sur lequel les corps d'encliquetage (10) sont supportés de manière opposée à la branche en porte-à-faux (35).

7. Machine-outil selon l'une des revendications 1 à 6, **caractérisée en ce que** l'organe d'appui (24) s'appuie axialement contre la branche en porte-à-faux (35) lorsque l'unité (5) de limitation de couple est mise hors fonctionnement.
